# EUROPEAN PATENT SPECIFICATION

(11) **EP 3 194 141 B1**
(45) Date of publication and mention of the grant of the patent: **24.06.2020**
(21) Application number: 14901886.3
(22) Date of filing: 15.09.2014
(51) Int. Cl.: B29B 9/06, B29B 9/12, B29C 48/00, B29C 48/05, B29C 48/09, B29C 48/30, B29C 48/345, B29C 48/25

(54) **EXTRUSION METHOD AND UNDERWATER-PELLETIZER FOR PRODUCING HOLLOW PELLETS**
EXTRUSIONSVERFAHREN UND UNTERWASSERGRANULIERER ZUM HERSTELLEN HOHLER GRANULATE
PROCÉDÉ D'EXTRUSION ET GRANULATEUR IMMERGÉ POUR LA FABRICATION DES PASTILLES CREUSES

(43) Date of publication of application: 26.07.2017
(73) Proprietor: Gala Industries, Inc., Eagle Rock, VA 24085 (US)
(72) Inventor: MARTIN, J., Wayne, Buchanan, VA 24066 (US); FRIDLEY, Michael, A., Troutville, VA 24175 (US); ELOO, Michael, 46509 Xanten (DE)
(74) Representative: Thoma, Michael
(86) International application number: PCT/US2014/055583
(87) International publication number: WO 2016/043694

(56) References cited:
- EP-A1- 0 687 544
- EP-A1- 0 687 544
- EP-A2- 1 938 949
- JP-A- 2001 269 983
- US-A- 2 723 028
- US-A- 3 191 413
- US-A- 4 728 276
- US-A1- 2009 206 507
- US-A1- 2010 040 716
- US-A1- 2010 040 716
- US-A1- 2010 117 258
- US-A1- 2011 291 318
- US-A1- 2011 291 318

## Description

### 1. Field of the Invention

The present invention relates generally to an extrusion process to produce hollow pellets, wherein an insert is placed in the die holes of an extrusion die, about which is extruded the molten material to form those hollow pellets.

### 2. Description of Related Art

Pelletization equipment and its use following extrusion processing has been introduced and/or utilized in applications by the assignee for many years as is exemplified by disclosures including U.S. Patent Nos. 4,123,207; 4,251,198; 4,500,271; 4,621,996; 4,728,276; 4,888,990; 5,059,103; 5,403,176; 5,624,688; 6,332,765; 6,551,087; 6,793,473; 6,824,371; 6,925,741; 7,033,152; 7,157,032; 7,171,762; 7,172,397; 7,318,719; 7,402,034; 7,421,802; 7,524,179; 7,771,635; 8,007,701; 8,011,912; 8,080,196; 8,205,350; 8,220,177; 8,303,871; 8,361,364; 8,366,428; 8,444,923; 8,512,021; 8,562,883; 8,671,647; and 8,708,688; U.S. Patent Application Publication Nos. 2012/0084993; 2012/0280419; 2012/0000161; 2013/0036714; 2012/0298475; and 2009/0206507; U.S. Patent Application No. 14/198,270; German Patents and Applications including DE 32 43 332, DE 37 02 841, DE 87 01 490, DE 196 42 389, DE 196 51 354, and DE 296 24 638; and European Patents and Applications including EP 1 218 156, EP 1 582 327, and EP 2 008 784. These patents and applications are all owned by the assignee.

These disclosures remain silent as to the use of inserts in the pelletization process. More specifically, these disclosures remain silent regarding the use of inserts in the extrusion die, wherein molten material flows about the extrusion die and the insert such that a hollow pellet is generated.

Furthermore, document US 2010/117258 A1 discloses a method and apparatus for production of tubes comprising an extruder with a die head for extruding tubes including internal longitudinal webs, wherein the die head includes a die mandrel having a first portion attached to the die body and a second portion extending in the die hole so as to extrude the tube with at least one internal longitudinal web. The die body has a die mandrel locating device arranged at the upstream side of the die body for locating the die mandrel centrally of the die hole.

Finally, document US 2011/0291318 A1 discloses an extrusion process for producing hollow pellets. The pelletizer includes an extrusion die having a die orifice and an insert that is placed in the die orifice to produce the hollow pellets, wherein the insert comprises a mandrel and a plurality of distinct fins extending a length of the insert.

### Brief summary of the invention

The present invention provides for an extrusion process for producing hollow pellets as defined by claim 1 and a related underfluid pelletizer for producing such hollow pellets as defined by claim 7. Preferred embodiments of the invention are laid down in the dependent claims.

Briefly described, the various embodiments of the present invention provide a process to extrude hollow pellets by use of at least one insert through at least one die orifice in an extrusion die. Molten material passes to, and through, the die orifice containing the insert. The molten material is extruded, preferably with pressure, to give a hollow pellet on cooling, such that the hollow cavity formed can be at least one of continuously hollow throughout the pellet, completely and circumferentially enclosed within the pellet, and many combinations there between such that the enclosed hollow cavity is at least perforatedly connected in at least one locus to the outside of the pellet.

The hollow pellets are reproducible in structure and can be of any molten material, preferably polymeric, and any geometry both from the pellet shape, as well as the hollow cavity shape. The hollow pellet obtained is dependent upon, but not limited to, the extrusion viscosity, die swell, material composition, temperature of the melt, rate of cooling, degree of crystallization, melt index, cutting speed of the pelletization process, and the like.

It is, therefore, an aspect of the present invention to provide a method to produce relatively consistent and reproducible hollow pellets utilizing at least one insert in at least one orifice of an extrusion die about which the molten material is extruded such that the pellet shape, pellet diameter, cavity shape, cavity diameter, and penetration of that cavity or the lack thereof in and/or through the pellet is controlled, and, as a further aspect of present invention, a related underfluid pelletizer.

### BRIEF DESCRIPTION OF THE DRAWINGS

Figure 1 is a schematic vertical sectional view of one embodiment of the single-body extrusion die assembly of the present invention in which the perforated is of single-body construction.
Figure 2 is a schematic vertical sectional view of a removable insert extrusion die assembly of the present invention in which the perforated is of removable center construction.
Figure 3 is a schematic vertical sectional view illustrating the association of the die orifice and insert.
Figure 4 is a schematic view of one embodiment of the insert.
Figure 5 is a cross-sectional view of the insert of Figure 4 in the die hole.
Figure 5a is a horizontal cross-sectional view of the insert of Figure 4 in the die hole at line a.
Figure 5b is a horizontal cross-sectional view of the insert of Figure 4 in the die hole at line b.
Figure 5c is a horizontal cross-sectional view of the insert of Figure 4 in the die hole at line c.
Figure 5d is a horizontal cross-sectional view of the insert of Figure 4 in the die hole at line d.
Figure 6a is an elevated back perspective view of a second embodiment of the insert.
Figure 6b is a side perspective view of an alternative embodiment of the insert.
Figure 6c is a front perspective view of the insert of Figure 6a.
Figure 7a is a cross-sectional view of the insert of Figure 6a in the die hole.
Figure 7b is an elevated back perspective view of another embodiment of the insert.
Figure 7c is a front perspective view of the insert of Figure 7b.
Figures 8a and 8b show a side, cross-sectional view of yet another embodiment of the insert.
Figure 8c is a front perspective of the insert of Figures 8a and 8b.
Figures 9a-i are illustrations of various pellet geometries in top view, cross-section, and side view, including Figure 9a that illustrates a top view of a cylindrical pellet through which the hollow completely penetrates.
Figure 9b illustrates a cross-sectional view of the hollow approximately cylindrical pellet from Figure 9a.
Figure 9c illustrates a side view of the hollow approximately cylindrical pellet from Figure 9a.
Figure 9d illustrates a top view of an approximately round pellet.
Figure 9e illustrates the cross-section through the round pellet in Figure 9d.
Figure 9f illustrates a top view of an approximately rectangular pellet.
Figure 9g illustrates a cross-sectional view through the pellet in Figure 9f showing a round hollow or cavity within that rectangular pellet.
Figure 9h illustrates a top view of an approximately round pellet.
Figure 9i illustrates a cross-sectional view through the pellet in Figure 9h wherein a cavity has perforations into and through the pellet wall.

### DETAILED DESCRIPTION

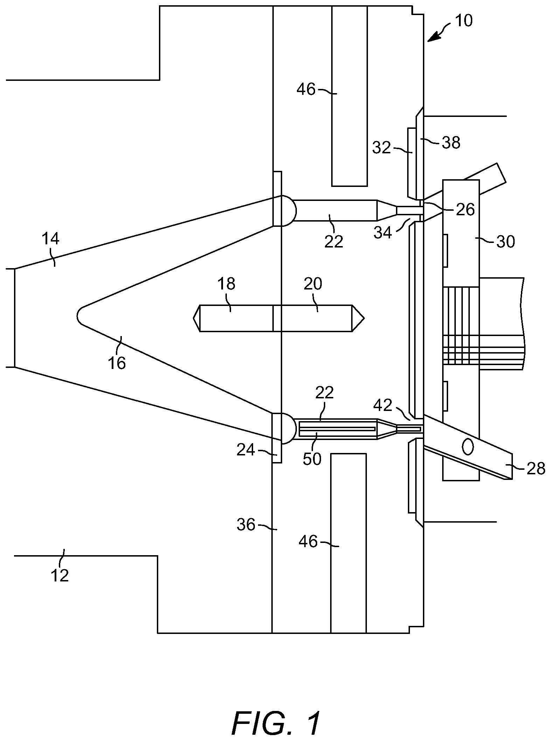

Referring to the drawings, Figure 1 illustrates one embodiment of the present invention associated with components of a pelletizer. The pelletizer includes an inlet housing 12 from a melting and/or mixing apparatus (not shown). The inlet housing 12 includes a passageway 14 for molten material or other extrudate (hereinafter collectively referred to as "process melt") that can include organic materials, oligomers, polymers, waxes, and combinations thereof without intending to be limited. Nose cone 16 directs the process melt to the upstream side of the single-body extrusion die 10 to which it is attachedly connected by a threaded rod (not shown). The threaded rod is screw-threaded at one end into threaded bore 18 of nose cone 16 and, at its distal end, into threaded bore 20 of single-body extrusion die 10. Alternately, the nose cone 16 can be continuous with the single-body extrusion die 10 and need not be attachedly connected as herein described.

The single-body extrusion die 10 contains at least one and, preferably, a multiplicity of die holes 22, concentrically arranged singly or in multiples thereof in at least one ring, that extend from the upstream face 24 to the downstream face 26 of single-body extrusion die 10. A plurality of knife blade assemblies 28 mounted on a rotatably driven cutter hub 30 in a cutting chamber (not shown) cuts the extruded, cooled, and at least partially solidified process melt into pellets. The pellets thusly formed are transported mechanically, pneumatically, hydraulically, and in combinations thereof to downstream processing.

Areas of the downstream face 26 optionally can be cut out to provide at least one annular recess or cavity 32 peripherally adjacent to the die holes 22 such that the die holes 22 are contained in protrusions 34 that are continuous with the base plate 36 of single-body extrusion die 10. Within die holes 22, with or without protrusions 34, are an equivalent number of inserts 50 detailed herein below. Annular cover plate 38 overlays the annular recess or cavity 32 and is attachedly connected to base plate 36 and protrusions 34 by brazing, welding, or similar technique known to those skilled in the art. The cover plate 38 can be at least one of an abrasion and corrosion resistant metal, preferably nickel steel, a hard face material, preferably tungsten carbide, and many combinations thereof. Similarly, attachment of the cover plate 38 to the base plate 36 and/or protrusions 34 is preferably achieved by welding, brazing, and the like. The surface of the cover plate 38 and, therefore, the downstream face 26 of single-body extrusion die 10 can optionally be coated with a chemical, abrasion, corrosion, and wear resistant coating as is known to those skilled in the art.

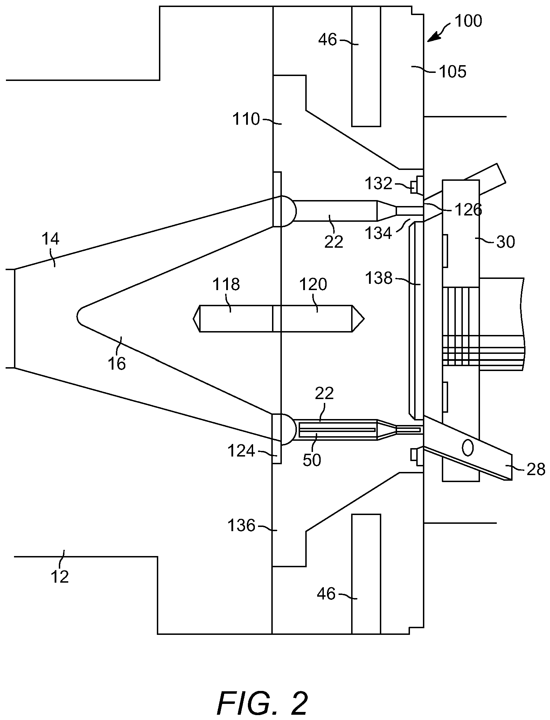

Figure 2 illustrates a removable insert extrusion die assembly 100 in a second embodiment of the present invention. Removable insert extrusion die assembly 100 is comprised of base plate 105 and removable insert 110. Similarly to Figure 1, the removable insert extrusion die assembly 100 is attachedly connected to an inlet housing 12 from a melting and/or mixing apparatus (not shown). The inlet housing 12 includes a passageway 14 for process melt as heretofore described. Nose cone 16 directs the process melt to the upstream side of the removable insert 110 to which it is attachedly connected by threaded rod (not shown). The threaded rod is screw threaded at one end into threaded bore 118 of nose cone 16 and at its distal end into threaded bore 120 of removable insert 110.

The removable insert 110 contains at least one and, preferably, a multiplicity of die holes 22 concentrically arranged singly or in multiples thereof in at least one ring that extend from the upstream face 124 to the downstream face 126 of removable insert 110. A plurality of knife blade assemblies 28 mounted on a rotatably driven cutter hub 30 in a cutting chamber (not shown) cuts the extruded, cooled, and at least partially solidified process melt into pellets. The pellets thusly formed are transported mechanically, pneumatically, hydraulically, and in combinations thereof to downstream processing as before.

Areas of the downstream face 126 optionally can be cut out to provide at least one annular recess or cavity 132 peripherally adjacent to the die holes 22 such that the die holes 22 are contained in protrusions 134 that are continuous with the removable center base plate 136 of removable insert 110. Within die holes 22, with or without protrusions 134, are an equivalent number of inserts 50 detailed herein below. Annular cover plate 138 overlays the annular recess or cavity 132 and is attachedly connected to removable center base plate 136 and protrusions 134 by brazing, welding, or similar technique known to those skilled in the art. The cover plate 138 can be at least one of an abrasion and corrosion resistant metal, preferably nickel steel, a hard face material, preferably tungsten carbide, and many combinations thereof. Similarly, attachment of the cover plate 138 to the removable center base plate 136 and/or protrusions 134 is preferably achieved by welding, brazing, and the like. The surface of the cover plate 138 and, therefore, the downstream face 126 of removable insert 110 can optionally be coated with a chemical, abrasion, corrosion, and wear resistant coating as is known to those skilled in the art.

Heating and/or cooling processes can be provided by electrical resistance, induction, steam or heat transfer fluid as has been conventionally disclosed for the single-body extrusion die 10, as well as the removable insert extrusion die assembly 100. The removable insert 110 and the base plate 105 alternatively can be heated separately by similar or differing mechanisms. Preferably, heating elements 46 are inserted into the single-body extrusion die 10 or the removable insert extrusion die assembly 100 as illustrated in Figures 1 and 2, respectively. Other designs as are known to those skilled in the art are included herein by way of reference without intending to be limited.

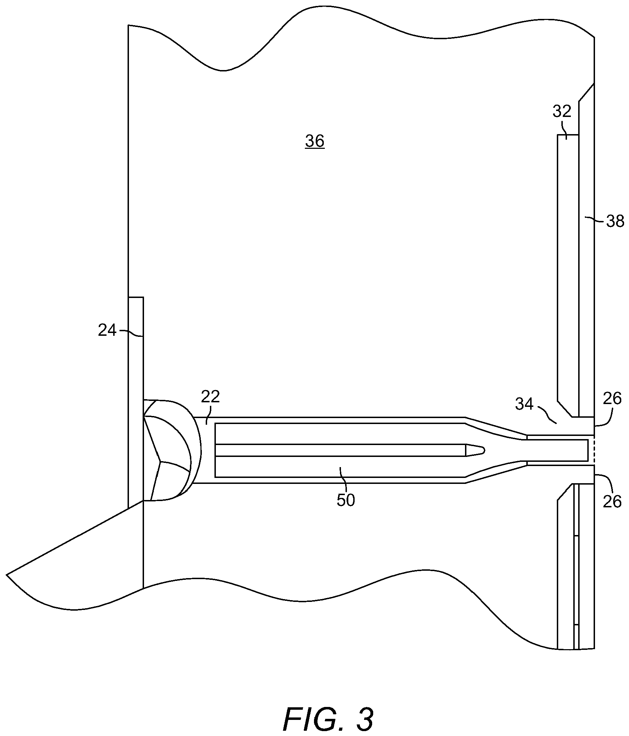

Turning now to Figure 3 for the single-body extrusion die 10, insert 50 is illustrated within die hole 22 that extends from upstream face 24 into and through optional protrusion 34 in base plate 36 to downstream face 26 of cover plate 38. Optional annular recess or cavity 32 is also shown for purposes of clarification. An analogous assembly follows for removable insert 110 and is not shown.

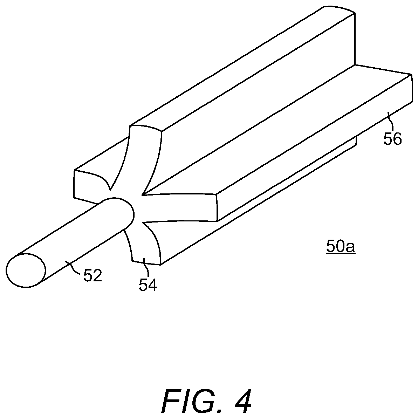

Figure 4 illustrates the details of construction for one embodiment of insert 50. As seen in Figure 4, insert 50a comprises a mandrel 52, a multiplicity of insert fin tapers 54, and a multiplicity of fins 56. The insert 50a can be made of any abrasion-resistant material and is preferably metal. The metal can be aluminum, brass, bronze, copper, steel, tool steel, carbon steel, vanadium steel, stainless steel, nickel steel, nickel, and the like without intending to be limited. More preferably the metal is a good heat conductor including brass, bronze, and copper. It is believed that the thermally conductive metals maintain uniformity of temperature in the process melt propagating into and through the die hole 22. This is effective in minimizing loss of heat and/or variation in temperature as the material flows in the multiplicity of pathways formed by the multiplicity of fins 56.

The dimensions of insert 50a must be such that it does not exceed the dimensions of die hole 22 at process temperature and must take into consideration the differential expansion wherein the metal of insert 50a differs from that of base plate 36 or removable insert 110. Fins 56 not only form a multiplicity of flow pathways for the process melt, but also further serve to maintain the position of insert 50a in die hole 22. The minimum number of fins is at least two and, preferably, at least three. More preferably, there are at least four fins 56 on insert 50a. The multiplicity of fins 56 can be oriented at any angle relative to the adjacent fins to form pathways through which flows the polymer melt. Preferably, the fins are 180 degrees apart or less. More preferably, the fins are 120 degrees or less apart. Most preferably, the fins are 90 degrees or less apart. As a result, in some cases, the insert has at least four fins disposed about insert 50a such that each of the at least four fins is disposed less than or equal to about 90 degrees apart from an adjacent fin.

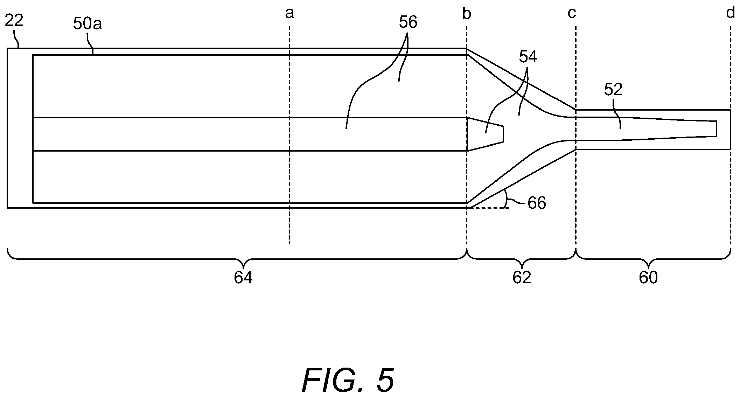

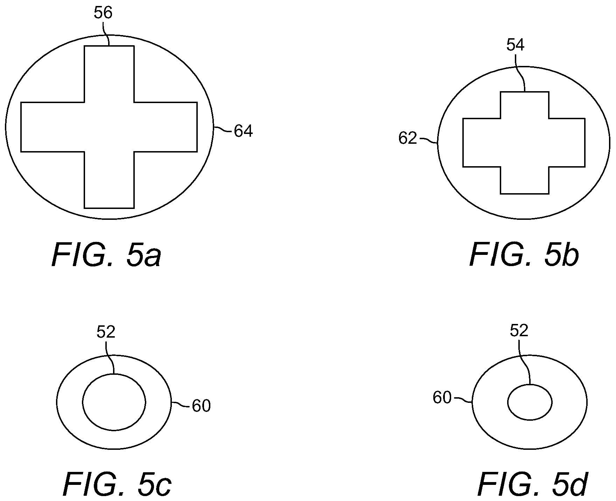

Figure 5 shows insert 50a within die orifice or hole 22. As seen therein, mandrel 52 is significantly contained within die land 60, insert fin tapers 54 approximately correspond dimensionally to die hole taper 62, and fins 56 are approximately contained within pre-land tube 64. The length of die land 60 typically ranges from at least approximately 3.8 millimeters (approximately 0.15 inch) to approximately 31.75 millimeters (approximately 1.25 inches) and is preferably at least approximately 6.4 millimeters (approximately 0.25 inch) to approximately 25 millimeters (approximately 1.00 inch). Mandrel 52 within die land 60 is preferably flush with downstream face of the extrusion die. In an alternative embodiment, the length of mandrel 52 may be less than the length of die land 60. In such an alternative embodiment, the length of mandrel 52 is no more than about 0.50 millimeters (approximately 0.020 inch) to about 5.0 millimeters (approximately 0.20 inch) less than the length of die land 60, thereby making the tip of mandrel 52 very slightly recessed from the downstream face of the extrusion die. Die land 60 and/or mandrel 52 can be cylindrical or tapered and can be round, oval, rectangular, and the like in geometry. Similarly, die land 60 and mandrel 52 can be of similar or different geometry. Insert 50a can be press fit and preferably is slide fit into die hole 22.

The insert fin tapers 54 are similar in angularity, at angle 66, to die hole taper 62 that can range from 0° to 90° as measured from the perpendicular cylinder imposed on the diameter of pre-land tube 64 at the juncture with die hole taper 62. Preferably angle 66 ranges from 15° to 45° as described herein. The insert fin tapers 54 can be the same contour as, or different than, that of die hole taper 62 and dimensionally must taper from the diameter of fins 56 to the diameter of mandrel 52. Similarly, fins 56 can be similar to the geometry, cylindrical or tapered and combinations thereof for example, of pre-land tube 64 or can be different in geometry. Preferably, pre-land tube 64 and fins 56 are cylindrical. The length of fins 56 can be the same as the length of pre-land tube 64, but is preferably less than the length of pre-land tube 64. More preferably, the length of fins 56 is at least approximately 0.50 millimeters (approximately 0.020 inch) less than the length of pre-land tube 64 such that the fins do not protrude outside the length of pre-land tube 64.

Figure 5a illustrates an exemplary cross-sectional design of fins 56 in pre-land tube 64 at line a. Figure 5b illustrates an exemplary cross-section design of insert fin tapers 54 in die hole taper 62 at line b. Figure 5c illustrates an exemplary cross-sectional design of mandrel 52 at the attachment point to insert fin tapers 54 in die land 60 at line c. Figure 5d illustrates an optional decreasingly tapered mandrel 52 in die land 60 at line d.

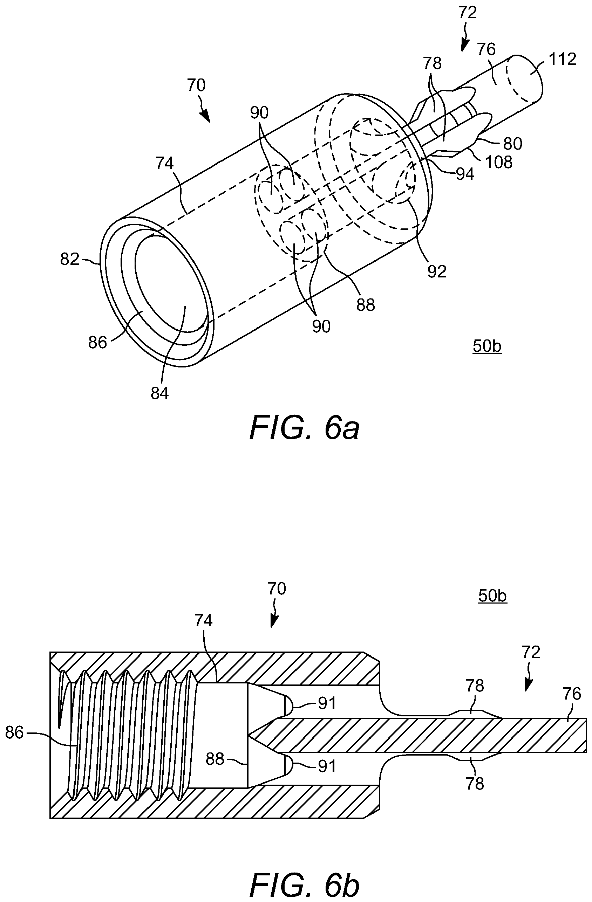

Figures 6a-6c illustrate the details of construction for alternative embodiments of insert 50. Referring first to Figure 6a, insert 50b comprises rear section 70 and forward section 72. Rear section 70 comprises can 74. Forward section 72 comprises mandrel 76, which comprises a plurality of fins 78 and a plurality of fin tapers 80. Can 74 in rear section 70 of insert 50b includes a back edge 82 and a hollow cavity 84. Back edge 82 is open so as to receive the process melt therein. Between back edge 82 and hollow cavity 84 is an optional thread 86. Thread 86 may be used to take insert 50b out of or place it in die hole 22 by, for example, inserting a tool into thread 86 so as to grab insert 50b for removal from or placement within die hole 22. A useful feature of this optional thread is the flexibility to be able, with minimum investment, to switch the pelletizing operation from producing hollow pellets to normal, non-hollow (solid) pellets and back again.

The hollow cavity 84 of can 74 includes a front wall 88. Front wall 88 may be flat, as shown in Figure 6a. Front wall 88 includes at least one hole 90. Front wall 88 can also include at least two holes 90, at least three holes 90, or at least four holes 90. In the alternative, rather than front wall 88 being flat, the region comprises a plurality of tapered inlets 91, as shown in Figure 6b. Tapered inlets 91 help funnel the molten material into at least one hole 90 and also help prevent material build up at front wall 88.

Referring back to Figure 6a, at least one hole 90 originates in front wall 88 of hollow cavity 84 and extends to front wall 92 of rear section 70 of insert 50b. The at least one hole 90 enables the process melt to flow from hollow cavity 84 and to be fed toward forward section 72 of insert 50b without obstructing the flow of the process melt or causing an unnecessary pressure increase. The front wall 92 may optionally include a chamfer 94.

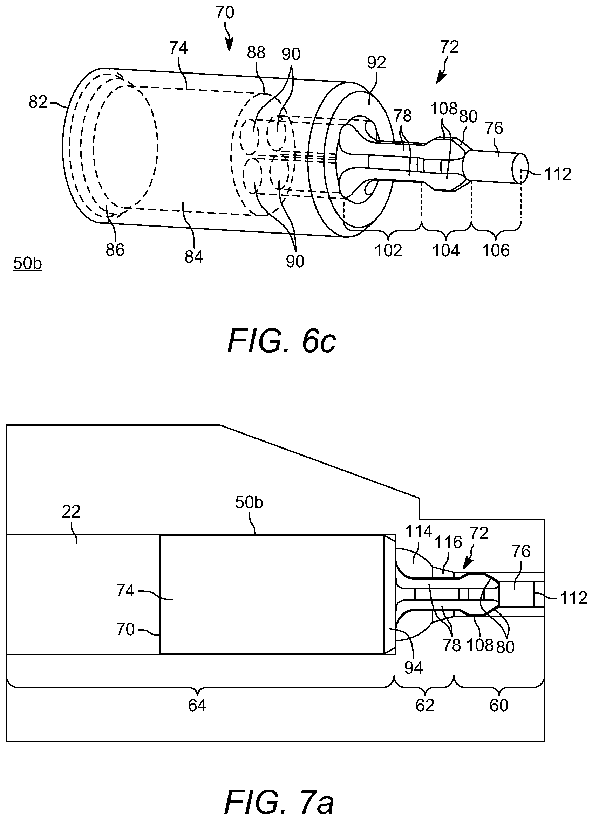

Figure 6c is a front perspective view of insert 50b, showing more clearly forward section 72 of insert 50b, which includes mandrel 76, plurality of fins 78 on mandrel 76, and plurality of fin tapers 80. Mandrel 76 has at least three distinct regions, preferably, a base region 102, a middle region 104, and a forward region 106. In base region 102, fins 78 extend forward along mandrel 76 from front wall 92 of rear section 70 toward forward region 106 and the downstream face of the extrusion die. This allows the process melt to come through the at least one hole 90 and maintain constant laminar or other desirable flow through the at least one hole 90 and along fins 78. Fins 78 act as guides for the process melt without obstructing the flow of the process melt. In middle region 104, fins 78 have protrusions 108. Fins 78 terminate at fin tapers 80 within the middle region of mandrel 76. Insert fin tapers 80 dimensionally taper from the diameter of fins 78 to the diameter of mandrel 76 without fins 78. Forward region 106 of mandrel 76 can, therefore, be devoid of fins. The lack of fins in forward region 106 can enable the process melt to flow around the forward region 106 of mandrel 76 so that when the process melt is extruded out of die hole 22, the resulting hollow pellets can be completely formed, without gaps, as might be caused if the fins 78 extended to the tip 112 of the mandrel 76.

The minimum number of fins 78 located on mandrel 76 is at least two and, in some cases, at least three. In some embodiments, there are at least four fins 78 located on mandrel 76. The plurality of fins 78 on mandrel 76 can be oriented at any angle relative to the adjacent fins to form pathways through which flows the polymer melt. Fins 78 can be equally spaced from one another. Thus, fins 78 can be disposed about 180 degrees or less apart from each other about mandrel 76, about 120 degrees or less apart from each other about mandrel 76, or about 90 degrees or less apart from an adjacent fin about the mandrel.

Referring now to Figure 7a, insert 50b is illustrated within die hole 22. The dimensions of insert 50b must be such that they do not exceed the dimensions of die hole 22 at process temperature and must also take into consideration the differential expansion, wherein the metal of insert 50b differs from that of base plate 36 or removable insert 110.

Fins 78 not only form a multiplicity of flow pathways for the process melt, but also further serve to maintain the position of mandrel 76 in die hole 22. Pressure or flow differentials in die hole 22 and/or forces of rotating cutter hub 30 with blade 28 can impart a force onto mandrel 76 that can cause mandrel 76 to move. Fins 78 on mandrel 76 provide additional support and stability for mandrel 76, holding mandrel 76 steady in die hole 22 and preventing mandrel 76 from any undesired movement. Protrusions 108 abut die hole 22, helping to maintain the position of mandrel 76 in die hole 22.

Insert 50b is within die hole 22 such that middle region 104 and forward region 106 of mandrel 76 are significantly contained within die land 60. Also seen therein, die hole taper 62 can comprise two regions, 114 and 116. Region 114 may optionally be curved (shown) or flat (not shown). Similarly, region 116 may optionally be a straight, tapering, diagonal region (shown) or may be flat (not shown). Fins 78 extend through die hole taper 62 and into die land 60, where the protrusions 108 can abut the die land 60 to maintain the position of the mandrel 76.

Once again, the length of die land 60 typically ranges from at least approximately 3.8 millimeters (approximately 0.15 inch) to approximately 31.75 millimeters (approximately 1.25 inches) and is preferably at least approximately 6.4 millimeters (approximately 0.25 inch) to approximately 25 millimeters (approximately 1.00 inch). Mandrel 76 within die land 60 is preferably flush with downstream face of the extrusion die. In an alternative embodiment, the length of mandrel 76 may be less than the length of die land 60. In such an alternative embodiment, the length of mandrel 76 is no more than about 0.50 millimeters (approximately 0.020 inch) to about 5.0 millimeters (approximately 0.20 inch) less than the length of die land 60, thereby making the tip 112 of mandrel 76 very slightly recessed from the downstream face of the extrusion die.

Die land 60 and mandrel 76 can be of similar or different geometry. Die land 60 can be cylindrical or tapered and can be round, oval, rectangular, star-shaped, and the like in geometry. Mandrel 76 may be cylindrical or tapered and can be round, oval, rectangular, star-shaped, and the like in geometry. Forward section 72, via fins 78, may be a pressed fit plug and is preferably press fit into die hole 22.

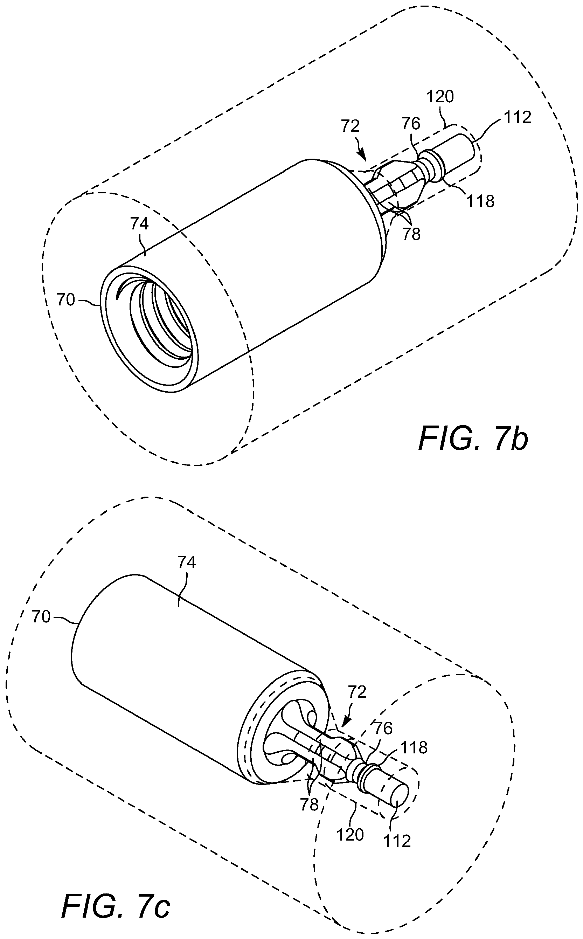

Figures 7b and 7c illustrate the details of another embodiment of insert 50b within die hole 22. Figure 7b is an elevated back perspective view of the insert, while Figure 7c is a front perspective view of the insert. As seen therein, mandrel 76 includes protrusion 118. In situations where front wall 88 includes more than one hole 90, protrusion 118 may be used to squeeze the polymer flows that exit holes 90 back together into a single uniform flow. Protrusion 118 works by pressing the melt flow outward between protrusion 118 and the wall 120 of die hole 22 when the melt flow passes over protrusion 118, thereby resulting in a single uniform flow of molten material rather than a plurality of flows.

Insert 50b can be made of any abrasion-resistant material and is preferably metal. The metal can be aluminum, brass, bronze, copper, steel, tool steel, carbon steel, vanadium steel, stainless steel, nickel steel, nickel, and the like without intending to be limited. In some embodiments, the metal may be a good heat conductor including brass, bronze, and copper. It is believed that the thermally conductive metals maintain uniformity of temperature in the process melt propagating into and through die hole 22. This is effective in minimizing loss of heat and/or variation in temperature as the material flows in the multiplicity of pathways formed by plurality of fins 78. Preferably, the metal selected is greater in strength and abrasion resistance, such as stainless steel, which also has a lower thermal conductivity and is a better heat insulator.

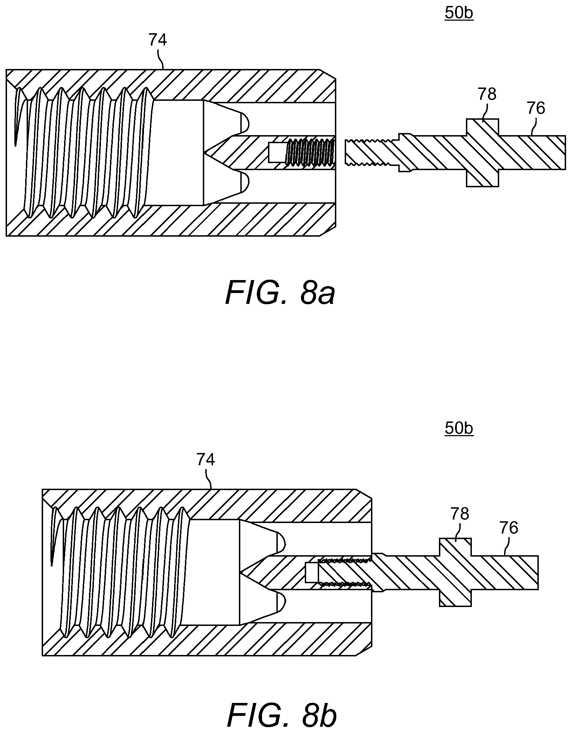

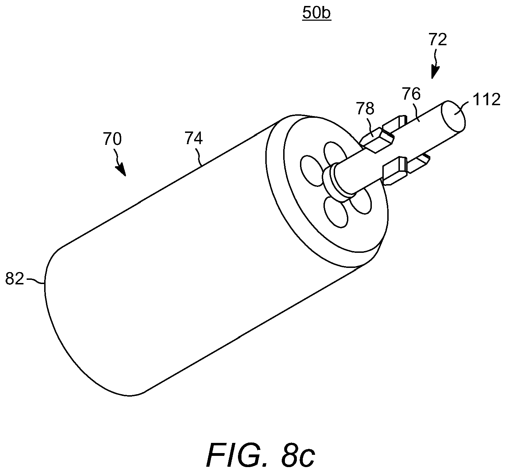

In one embodiment, the insert may be a one-piece assembly comprising the can and the mandrel. In another embodiment, the mandrel may be separate from the can, thereby allowing for a multi-piece assembly. Figures 8a-8c show a multi-piece assembly of the insert. Referring first to Figure 8a, as seen therein, insert 50b comprise can 74 and mandrel 76. In this multi-piece embodiment, mandrel 76 is removable from can 74. Mandrel 76 may be threaded into can 74, as illustrated in Figure 8b. In the alternative, the mandrel may be attachedly connected to the can in some other manner. Figure 8c is a front perspective of the multi-piece assembly showing the mandrel 76 attached to can 74.

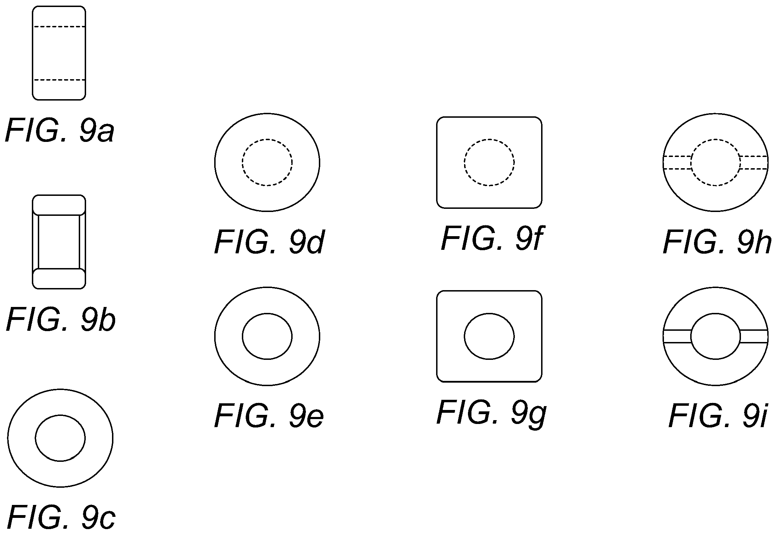

Figures 9a-i illustrates the various geometries of the hollow pellets formed in accordance with the present invention. Figure 9a illustrates a top view of a cylindrical pellet through which the hollow cavity completely penetrates. Figure 9b illustrates a cross-sectional view of the hollow, cylindrical pellet from Figure 9a, while Figure 9c illustrates a side view of the same pellet. Figure 9d illustrates a top view of an approximately-round pellet with Figure 9e illustrating the cross-section through that pellet. Figure 9f illustrates a top view of an approximately-rectangular pellet with Figure 9g illustrating a cross-sectional view through that pellet, showing a round, hollow cavity within that rectangular pellet. Figure 9h illustrates a top view of an approximately round pellet with Figure 9i illustrating a cross-sectional view through that pellet, showing a cavity with perforations into, and through, the pellet wall. It is understood by those skilled in the art that many pellet shapes and cavity shapes can be achieved by methodologies of the present invention without intending to be limited.

Hollow pellet formation is significantly controlled by the melt rheology and, particularly, the melt viscosity. Fractional melt materials typically form torus or donut-shaped pellets as illustrated in Figures 9a-c described hereinabove. As the melt viscosity decreases and, therefore, the melt flow index increases, it was found that more closure of the pellet was achievable to form a completely enclosed cavity as illustrated in Figures 9d-g. As melt viscosity continues to drop and melt flow index, therefore, increases, less completely enclosed cavities were generated, perforations were introduced, and eventually the cavities were found to collapse or partially collapse leading to irregular cavity geometry.

Additionally, such factors as chemical composition, melting point range, and crystallinity are important, as these affect the fluidity and temperature of the process melt. Crystallization is typically exothermic and adds to the melt process temperature, thereby lowering the viscosity. The narrower the melting point range, the less cooling necessary to significantly increase the solidification and, therefore, the more challenging to form a completely enclosed cavity as compared with a torus or donut-shaped pellet through which the cavity completely penetrates. The polarity, branching, and hydrophobic/hydrophilic interactions of polymers influence the properties in the melt phase as well as the processes leading to solidification. The ability of a material to swell on exiting the die is also an important factor in assessing the closure of the pellet, as well as the necessary difference in diameter of the mandrel and the die land to achieve a pellet of a desired diameter containing a cavity of a particular diameter. As the melt viscosity decreases, the control of these variables decreases and the temperature influences of crystallization, if present, increase.

The moisture uptake was evaluated as a means of elucidating possible entrapment of moisture wherein pelletization was done in the preferred underwater pelletizing. It was anticipated that moisture would be proportionately high wherein entrapment of the transport fluid, preferably water, occurred in the hollow cavities generated. It was surprisingly found that moisture contents were significantly lower than expected after taking into account the difference in mass of a comparable diameter solid pellet to the reduced mass of the hollow pellet and even more surprising that moisture reduction increased as the polarity of the material increased. For example, both polyethylene and polypropylene hollow pellets were found to have comparable moisture content with solid pellets of comparable diameter whereas ethyl vinyl acetate hollow pellets were found to have approximately one-half to two-thirds the moisture of the solid pellet.

Examples of materials for use in making hollow pellets according to the instant invention include, but are not limited to, polymers, copolymers, bio-polymers and bio-plastics, and combinations thereof.

The polymers useful in making the hollow pellets according to the present invention can be polyolefins, cross-linkable polyolefins, polyamides, polyimides, polyesters, polycarbonates, polysulfides, polysulfones, polyurethanes, polyethers, polythioethers, waxes, hot melt adhesives, asphalt, thermoplastic elastomers, rubbers, cellulosics, gum base, vinyl polymers and substituted vinyl polymers including aromatic and aliphatic vinyl polymers, aromatic alkenyl polymers such as polystyrene, and copolymers of the foregoing.

Examples of bio-plastics either as the final hollow pellets or as a component of a formulation with or without any other bio or non-bio polymers or materials include, but are not limited to, polyhydroxyalkanoates, polyglycolides, polylactides, polyethylene glycols, polysaccharides, cellulosics, and starches, polyanhydrides, aliphatic polyesters and polycarbonates, polyorthoesters, polyphosphazenes, polylactones, and polylactams.

The polyolefins useful in the present invention can be ultra-low density polyethylene, linear low density polyethylene, low density polyethylene, medium density polyethylene, high density polyethylene, polybutylene, ionomers, polymethylpentene, polypropylene, ethylene-vinylacetate, alkyl and aryl substituted vinylics, halogenated and polyhalogenated vinylics, polyvinyl esters, polyvinyl alcohol, and copolymers thereof.

One or more additives may be included along with the molten material in making the hollow pellets according to the present invention. The additives can compositionally include, but are not limited to, rheology modifiers, cross-linking facilitating agents, antioxidant agents, ultraviolet stabilizers, thermal stabilizers, dyes, pigments, fillers, fibers, nucleating agents, expanding agents, encapsulated agricultural and pharmaceutical active ingredients, flavors and fragrances, tackifiers, detackifiers, pellet coatings, plasticizers, lubricants, waxes, biomaterial additives (which can include, but are not limited to, cellulosics, starches, and proteinaceous materials), coupling agents, binders, scavengers, synergists, processing aids, and pelletizing aids. The one or more additives can be single-component or multi-component formulations.

The polymers, copolymers, and one or more additives useful in the present invention can be amorphous, crystalline, or combinations thereof. The polymers, copolymers, and one or more additives may contain reactive functionalities, which can be cross-linkable. The reactive functionalities can be modified by chemical reaction, including by expansion.

As was anticipated, back-pressure on the extrusion process increases with the use of the inserts and was found to be alleviated by at least one of increasing the number of holes through the die, increasing the temperature of the process melt, and increasing the temperature of the die. These factors, as is understood by one skilled in the art, are not surprising consequences.

Hollow pellets made in accordance with the present invention have more surface area to volume ratio and reduce the distance from outside surface to the "core" as compared to normal, solid pellets, thereby providing the hollow pellets with several benefits over solid pellets. For example, use of hollow pellets can increase productivity because the hollow pellets not only melt faster but also dry, crystallize and/or solid state polymerize faster. After formation, some pellets are put in solvents, and the hollow pellets dissolve faster than normal, solid pellets. The hollow pellets also have improved mixing and dispersion properties in pre-compounding blends, thereby allowing for better dry mixing with other materials before being extruded or otherwise used. In some cases, less expensive pellets are needed to accomplish functionalities such as absorbing impact energies or reducing overall weight, and the hollow pellets can provide this. Additionally, expanding agents such as pentane may be included in the molten material, and the resulting pellets can be expanded into shapes such as "foam donuts" and used directly in packaging applications.

## Claims

1. An extrusion process for producing hollow pellets, the process comprising:
feeding a molten material into an underfluid pelletizer; and
extruding the molten material through an extrusion die [10] of the pelletizer;
the pelletizer further comprising a die hole [22], an insert [50] disposed in the die hole [22], the insert [50] comprising a rear section [70] and a forward section [72], the rear section [70] comprising a hollow can [74] and the forward section [72] comprising a mandrel [76], the mandrel [76] comprising a plurality of fins [78];
**characterized in that** during extrusion the molten material flows through the hollow can [74] of the insert [50], flows through at least one hole [90] of the insert [50] to the mandrel [76], and flows around the fins [78] disposed on the mandrel [76] of the insert [50], said fins [78] extending from an outer surface of the mandrel [76] and holding mandrel [76] steady in die hole [22] in the extrusion die [10] in which the insert [50] is placed.

2. The process of Claim 1, **characterized in that** after the molten material flows around the fins [78] disposed on the mandrel [76] of the insert [50] the molten material flows around a portion of the insert [50] that does not have fins.

3. The process of Claim 1, further comprising cooling the extruded molten material effective to produce a pellet having a hollow cavity [84], **characterized in that** the hollow cavity [84] penetrates a first surface of the pellet and continuously extends through a second surface of the pellet, is completely encapsulated within the pellet, or penetrates the first surface of the pellet and extends inwardly to an interior portion of a body of the pellet.

4. The process of Claim 1, **characterized in that** the insert [50] comprises a taper [80] between a back edge [82] of the insert [50] and the hollow can [74], and the molten material flows through the taper [80].

5. The process of Claim 1, **characterized in that** each of the two or more distinct fins [78] is disposed about 180° or less apart from an adjacent fin [78] about the mandrel [76].

6. The process of Claim 5, **characterized in that** a forward region [106] of mandrel [76] is devoid of fins [78].

7. An underfluid pelletizer for producing hollow pellets, comprising:
an inlet [12] for receiving a molten material;
a die hole [22], downstream of the inlet, for extruding the molten material; and
an insert [50] disposed in the die hole [22], the insert [50] comprising a rear section [70] and a forward section [72],
**characterized in that** the rear section [70] comprises a hollow can [74] and the forward section [72] comprises a mandrel [76], the mandrel [76] comprising a plurality of fins [78], said fins [78] extending from an outer surface of the mandrel [76] and holding mandrel [76] steady in die hole [22] in the extrusion die [10] in which the insert [50] is placed; and **in that** the insert [50] further comprises at least one hole [90] configured to enable the molten material to flow from the hollow can [74] to the mandrel [76].

8. The pelletizer of Claim 7, the plurality of fins [78] comprising protrusions [34] to maintain the position of the mandrel [76] in the die hole [22].

9. The pelletizer of Claim 7, **characterized in that** the mandrel [78] comprises a region [106] furthest from the rear section [70] of the insert [50], and **characterized in that** the region does not comprise fins.

10. The pelletizer of Claim 7, **characterized in that** the hollow can [74] is threaded.

11. The pelletizer of Claim 7, **characterized in that** the mandrel [76] is a removable mandrel.

12. The pelletizer of Claim 7, **characterized in that** the mandrel [76] may be threadedly attached to the can [74].

## Patentansprüche

1. Extrusionsverfahren zur Herstellung von hohlen Pellets, wobei das Verfahren umfasst:
Zuführen von geschmolzenem Material in einen Unterwasserpelletierer; und
Extrudieren des geschmolzenen Materials durch ein Extrusionswerkzeug [10] des Pelletierers;
wobei der Pelletierer ferner eine Werkzeugöffnung [22] aufweist, wobei ein Einsatz [50] in der Werkzeugöffnung [22] angeordnet ist, wobei der Einsatz [50] einen hinteren Abschnitt [70] und einen vorderen Abschnitt [72] aufweist, wobei der hintere Abschnitt [70] ein hohles Gießgefäß [74] aufweist und der vordere Abschnitt [72] einen Dorn [76] aufweist, wobei der Dorn [76] eine Vielzahl von Lamellen [78] aufweist;
**dadurch gekennzeichnet, dass** während der Extrusion das geschmolzene Material durch das hohle Gießgefäß [74] des Einsatzes [50] fließt, durch zumindest eine Öffnung [90] des Einsatzes [50] zu dem Dorn [76] fließt, und um die Lamellen [78], die an dem Dorn [76] des Einsatzes [50] angeordnet sind, herum fließt, wobei sich diese Lamellen [78] von einer Außenoberfläche des Dorns [76] erstrecken und den Dorn [76] stabil in der Werkzeugöffnung [22] in dem Extrusionswerkzeug [10] halten, in dem der Einsatz [50] platziert ist.

2. Verfahren nach Anspruch 1, **dadurch gekennzeichnet, dass** nachdem das geschmolzene Material um die Lamellen [78], die an dem Dorn [76] des Einsatzes [50] angeordnet sind, herumgeflossen ist, das geschmolzene Material um einen Abschnitt des Einsatzes [50] fließt, der keine Lamellen aufweist.

3. Verfahren nach Anspruch 1, ferner umfassend das Kühlen des extrudierten geschmolzenen Materials, was dahingehend wirksam ist, ein Pellet mit einer Hohlraum [84] herzustellen, **dadurch gekennzeichnet, dass** der Hohlraum [84] eine erste Oberfläche des Pellets durchdringt und sich kontinuierlich durch eine zweite Oberfläche des Pellets erstreckt, vollständig innerhalb des Pellets verkapselt ist, oder die erste Oberfläche des Pellets durchdringt und sich nach innen zu einem Innenabschnitt eines Körpers des Pellets erstreckt.

4. Verfahren nach Anspruch 1, **dadurch gekennzeichnet, dass** der Einsatz [50] eine Verjüngung [80] zwischen einer hinteren Kante [82] des Einsatzes [50] und dem hohlen Gießgefäß [74] aufweist, und das geschmolzene Material durch die Verjüngung [80] fließt.

5. Verfahren nach Anspruch 1, **dadurch gekennzeichnet, dass** jede der zwei oder mehr getrennten Lamellen [78] etwa 180° oder weniger beabstandet von einer benachbarten Lamelle [78] um den Dorn [76] herum angeordnet ist.

6. Verfahren nach Anspruch 5, **dadurch gekennzeichnet, dass** ein vorderer Bereich [106] des Dorns [76] keine Lamellen [78] aufweist.

7. Unterwasserpelletierer zur Herstellung von hohlen Pellets, aufweisend:
einen Einlass [12] zur Aufnahme von geschmolzenem Material;
eine Werkzeugöffnung [22] stromabwärts des Einlasses, zur Extrusion des geschmolzenen Materials; und
einen Einsatz [50], der in der Werkzeugöffnung [22] angeordnet ist, wobei der Einsatz [50] einen hinteren Abschnitt [70] und einen vorderen Abschnitt [72] aufweist,
**dadurch gekennzeichnet, dass** der hintere Abschnitt [70] ein hohles Gießgefäß [74] aufweist und der vordere Abschnitt [72] einen Dorn [76] aufweist, wobei der Dorn [76] eine Vielzahl von Lamellen [78] aufweist, wobei sich diese Lamellen [78] von einer Außenoberfläche des Dorns [76] erstrecken und den Dorn [76] stabil in der Werkzeugöffnung [22] in dem Extrusionswerkzeug [10] halten, in dem der Einsatz [50] platziert ist; und dass der Einsatz [50] ferner zumindest eine Öffnung [90] aufweist, die eingerichtet ist, es dem geschmolzenen Material zu ermöglichen, von dem hohlen Gießgefäß [74] zu dem Dorn [76] zu fließen.

8. Pelletierer nach Anspruch 7, wobei die Vielzahl von Lamellen [78] Vorsprünge [34] aufweist, um die Position des Dorns [76] in der Werkzeugöffnung [22] beizubehalten.

9. Pelletierer nach Anspruch 7, **dadurch gekennzeichnet, dass** der Dorn [78] einen Bereich [106] aufweist, der am weitesten von dem hinteren Abschnitt [70] des Einsatzes [50] entfernt ist, und **dadurch gekennzeichnet, dass** der Bereich keine Lamellen aufweist.

10. Pelletierer nach Anspruch 7, **dadurch gekennzeichnet, dass** das hohle Gießgefäß [74] ein Gewinde aufweist.

11. Pelletierer nach Anspruch 7, **dadurch gekennzeichnet, dass** der Dorn [76] ein entnehmbarer Dorn ist.

12. Pelletierer nach Anspruch 7, **dadurch gekennzeichnet, dass** der Dorn [76] vermittels Gewinde an dem Gießgefäß [74] befestigt werden kann.

## Revendications

1. Procédé d'extrusion destiné à la fabrication de pastilles creuses, le procédé comprenant :
l'alimentation d'un granulateur immergé en une matière en fusion ; et
l'extrusion de la matière en fusion à travers une matrice d'extrusion [10] du granulateur ;
le granulateur comprenant en outre un trou [22] de matrice, un insert [50] disposé dans le trou [22] de matrice, l'insert [50] comprenant une section arrière [70] et une section vers l'avant [72], la section arrière [70] comprenant une gaine creuse [74] et la section vers l'avant [72] comprenant un mandrin [76], le mandrin [76] comprenant une pluralité d'ailettes [78] ;
**caractérisé en ce que**, pendant l'extrusion, la matière en fusion coule à travers la gaine creuse [74] de l'insert [50], coule à travers au moins un trou [90] de l'insert [50] vers le mandrin [76], et coule autour des ailettes [78] disposées sur le mandrin [76] de l'insert [50], lesdites ailettes [78] s'étendant à partir d'une surface externe du mandrin [76] et maintenant le mandrin [76] en place dans le trou [22] de matrice dans la matrice d'extrusion [10] dans laquelle l'insert [50] est placé.

2. Le procédé selon la revendication 1, **caractérisé en ce que**, après l'écoulement de la matière en fusion autour des ailettes [78] disposées sur le mandrin [76] de l'insert [50], la matière en fusion coule autour d'une partie de l'insert [50] exempte d'ailettes.

3. Le procédé selon la revendication 1, comprenant en outre le refroidissement de la matière en fusion extrudée, efficace pour produire une pastille comportant une cavité creuse [84], **caractérisé en ce que** la cavité creuse [84] pénètre une première surface de la pastille et s'étend en continu à travers une seconde surface de la pastille, elle est complètement encapsulée à l'intérieur de la pastille, ou elle pénètre la première surface de la pastille et s'étend vers l'intérieur vers une partie intérieure d'un corps de la pastille.

4. Le procédé selon la revendication 1, **caractérisé en ce que** l'insert [50] comprend un effilement [80] entre un bord arrière [82] de l'insert [50] et la gaine creuse [74], et la matière en fusion coule à travers l'effilement [80].

5. Le procédé selon la revendication 1, **caractérisé en ce que** chaque ailette, parmi les deux ailettes distinctes ou plus [78], est disposée de manière espacée par environ 180° ou moins d'une ailette [78] adjacente autour du mandrin [76].

6. Le procédé selon la revendication 5, **caractérisé en ce que** une région vers l'avant [106] du mandrin [76] est exempte d'ailettes [78].

7. Granulateur immergé destiné à la fabrication de pastilles creuses, le granulateur comprenant :
une entrée [12] pour recevoir une matière en fusion ;
un trou [22] de matrice, en aval de l'entrée, pour l'extrusion de la matière en fusion ; et
un insert [50] disposé dans le trou [22] de matrice, l'insert [50] comprenant une section arrière [70] et une section vers l'avant [72],
**caractérisé en ce que** la section arrière [70] comprend une gaine creuse [74] et la section vers l'avant [72] comprend un mandrin [76], le mandrin [76] comprenant une pluralité d'ailettes [78], lesdites ailettes [78] s'étendant à partir d'une surface externe du mandrin [76] et maintenant le mandrin [76] en place dans le trou [22] de matrice dans la matrice d'extrusion [10] dans laquelle l'insert [50] est placé ; et **en ce que** l'insert [50] comprend en outre au moins un trou [90] conçu pour permettre l'écoulement de la matière en fusion de la gaine creuse [74] au mandrin [76].

8. Le granulateur selon la revendication 7, la pluralité d'ailettes [78] comprenant des saillies [34] pour maintenir la position du mandrin [76] dans le trou [22] de matrice.

9. Le granulateur selon la revendication 7, **caractérisé en ce que** le mandrin [78] comprend une région [106] la plus éloignée de la section arrière [70] de l'insert [50], et **caractérisé en ce que** ladite région ne comprend pas d'ailettes.

10. Le granulateur selon la revendication 7, **caractérisé en ce que** la gaine creuse [74] est filetée.

11. Le granulateur selon la revendication 7, **caractérisé en ce que** le mandrin [76] est un mandrin amovible.

12. Le granulateur selon la revendication 7, **caractérisé en ce que** le mandrin [76] peut être fixé par filetage à la gaine [74].
